# EUROPÄISCHE PATENTANMELDUNG

(11) **EP 0 990 606 A2**
(43) Veröffentlichungstag der Anmeldung: **05.04.2000**
(21) Anmeldenummer: 99115927.8
(22) Anmeldetag: 13.08.1999
(51) Int. Cl.: B65G 53/04, B65G 53/66

(54) **Verfahren und Vorrichtung zur pneumatischen Förderung von Schüttgütern**

(30) Priorität: 07.09.1998 DE 19840502
(71) Anmelder: Waeschle GmbH, 88250 Weingarten (DE)
(72) Erfinder: Stark, Bernhard, Dr., 88273 Fronreute (DE); Ernst, Reinhard, 88250 Weingarten (DE); Schlautmann, Ingo, 68167 Mannheim (DE)

(57) **Zusammenfassung**

Bei einem Verfahren zur pneumatischen Förderung von Schüttgütern, insbesondere von Kunststoffgranulaten, wird das Schüttgut mittels eines Fördergases unter Hinzufügung einer Flüssigkeit durch eine Förderleitung (3) von einem Aufgabeort (2) zu einem Zielort (4) bewegt. Dem Schüttgut und/oder dem Fördergas wird dabei eine solche Menge an Flüssigkeit zugegeben, daß das Fördergas während des Fördervorgangs zumindest bereichsweise in der Förderleitung (3) mit Flüssigkeit übersättigt ist, seine relative Feuchte am Ende der Förderleitung (3) jedoch unterhalb der Sättigungsgrenze liegt.

Es wird ferner angeregt, die Menge der zugefügten Flüssigkeit in Abhängigkeit von der relativen Feuchte des Fördergases und/oder der Oberflächenfeuchte des Schüttguts zu regeln, die insbesondere am Ende der Förderleitung (3) gemessen wird.

## Beschreibung

Die Erfindung betrifft ein Verfahren und eine Vorrichtung zur pneumatischen Förderung von Schüttgütern, insbesondere von Kunststoffgranulaten, bei der das Schüttgut mittels eines Fördergases durch eine Förderleitung unter Hinzufügung einer Flüssigkeit von einem Aufgabeort zu einem Zielort bewegt wird, sowie eine zur Durchführung des Verfahrens geeignete Vorrichtung.

### Stand der Technik

Bei der pneumatischen Druckförderung von Schüttgut wird die von dem Verdichter aus der Umgebung entnommene Luft zunächst gefiltert und anschließend komprimiert und gekühlt. Bei diesem Vorgang kondensiert Wasser aus, das in gasförmigem Zustand gemeinsam mit der Luft vom Verdichter angesaugt wurde. Dieses freie, flüssige Wasser wird über einen Wasserabscheider vom Luftstrom getrennt, so daß der absolute Wassergehalt im Fördergas abnimmt. Die relative Luftfeuchte fällt im Laufe der Förderung durch die Expansion des Fördergases und die damit verbundene Vergrößerung der Wasseraufnahmefähigkeit auf einen Wert, der weit unter der Sättigungsgrenze liegt und beispielsweise 30% betragen kann. Eine Anlage zur pneumatischen Förderung von Schüttgut hat daher grundsätzlich über die gesamte Länge der Förderleitung die Funktion einer Trocknungsvorrichtung.

Die geringe Feuchte des Fördergases kann jedoch nachteiligen Einfluß auf die Fördereigenschaften des Schüttgutes, insbesondere in Bezug auf elektrostatische Aufladungen, die Klebrigkeit der Schüttgutoberfläche sowie das Abriebverhalten des Schüttguts haben. Es ist an sich bekannt, diese Nachteile durch Zugabe von Flüssigkeit zu verringern.

Ein gattungsgemäßes Verfahren zur pneumatischen Förderung von Flocken aus einem synthetischen, polybutadienhaltigen Elastomer über eine Förderleitung in einen Lösemitteltank ist aus der Patentschrift US 4,789,272 bekannt. Den Flocken wird vor dem Eintreten in die Förderleitung Dampf, Wasser oder ein Gemisch aus Wasser und Dampf in einer Größenordnung von 2% bis 50%, bezogen auf das Gewicht des Polymeren, zugesetzt, um ein Verkleben der Polymerflocken untereinander und damit ein Verstopfen der Förderleitung zu verhindern.

Die mit dem Polymeren in den Lösemitteltank eingetragenen, erheblichen Wassermengen haben auf den nachfolgenden Prozeß keinen negativen Effekt, sofern die genannte Obergrenze der Wasserzugabe nicht überschriften wird. Eine zu geringe Zugabe an Wasser kann ein Verkleben nicht zuverlässig verhindern.

Aus der Druckschrift US 5,000,624 ist darüber hinaus ein Verfahren zur Aufbereitung von Beschichtungspulvern bekannt geworden, bei dem das Pulver zur Verbesserung der elektrostatischen Aufladbarkeit in einem Behälter befeuchtet und bei Erreichen des gewünschten Feuchtegehalts über eine Förderleitung einem Speicher zugeführt wird. Zum Befeuchten dient ein Strahl feuchter, temperierter Druckluft, der über einen Injektor das fluidisierte Pulver im Behälter ansaugt und umwälzt.

Die Konditionierung des Pulvers ist abgeschlossen, wenn es einen Feuchtegehalt von 0.04% bis 0.08%, bezogen auf das Gewicht des Pulvers aufweist, da unter diesen Bedingungen eine ausreichende Aufladbarkeit, aber auch eine unter einem höheren Feuchtegehalt leidende Haftfähigkeit beim nachfolgenden Beschichtungsvorgang gegeben ist.

Ferner werden im Stand der Technik, beispielsweise in der Druckschrift DE 36 23 390 C1, Verfahren und Vorrichtungen zur Reduzierung des Staubanfalls beim Austritt von Dammbaustoffen aus einer pneumatischen Förderleitung offenbart. Zu diesem Zweck wird in den Förderstrom im Endbereich der Förderleitung mit einer nicht näher spezifizierten Menge an Flüssigkeit eingesprüht, welche den Staub bindet, auf den Fördervorgang jedoch keinen Einfluß ausübt.

### Aufgabe

Der vorliegenden Erfindung liegt die Aufgabe zugrunde, die Entstehung von Abrieb bei der pneumatischen Förderung von Schüttgütern, insbesondere von Kunststoffgranulaten, mit geringem Aufwand zu reduzieren.

### Lösung

Die Aufgabe wird erfindungsgemäß dadurch gelöst, daß dem Schüttgut und/oder dem Fördergas eine solche Menge an Flüssigkeit zugegeben wird, daß das Fördergas während des Fördervorgangs zumindest bereichsweise in der Förderleitung mit Flüssigkeit übersättigt ist, seine relative Feuchte am Ende der Förderleitung jedoch unterhalb der Sättigungsgrenze liegt.

Die relative Feuchte ist dabei definiert als das Verhältnis der Masse des im Fördergas enthaltenen Dampfes einer Flüssigkeit zur größtmöglichen Masse an Dampf dieser Flüssigkeit, die das Fördergas unter den gegebenen Bedingungen (Druck, Temperatur) aufnehmen kann. Bei einer relativen Feuchte von 100% liegt also eine Sättigung des Fördergases mit Flüssigkeit vor. Im übersättigten Zustand ist freies, flüssiges Wasser im Förderstrom vorhanden, das jedoch aufgrund der eingangs beschriebenen Druckabhängigkeit der Wasseraufnahmefähigkeit des Fördergases im Laufe der Förderung verdampft.

Durch die Zugabe der Flüssigkeit zum Schüttgut und/oder Fördergasstrom, die sich im Verlauf des Fördervorgangs teilweise an der inneren Wandung der Förderleitung sowie an der Oberfläche des Schüttgutes niederschlägt, wird die Reibung zwischen den Schüttgutpartikeln und der Wandung der Förderleitung verringert. Außerdem wirkt der Flüssigkeitsfilm beim Auftreffen des Schüttguts auf die Förderleitung kühlend. Diese Effekte führen dazu, daß die Bildung staubförmigen Abriebs und die Entstehung sogenannten 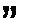 Engelshaars" vermindert werden. Am Ende der Förderleitung sinkt die relative Feuchte des Fördergases durch die Entspannung des Fördergases unter die Sättigungsgrenze, wobei die auf dem Schüttgut befindliche Flüssigkeit bis auf einen unbedeutenden Rest verdampft.

Durch Anwendung des erfindungsgemäßen Verfahrens kann in vielen Fällen auf ein zur Vermeidung von Abrieb vorgenommenes Aufrauhen der inneren Wandung der Förderleitung verzichtet werden, auch wenn ein solches Vorgehen als ergänzende Maßnahme der Erfindung nicht entgegensteht.

Die Erfindung umfaßt ferner die Regelung der Menge der zugefügten Flüssigkeit in Abhängigkeit der relativen Feuchte des Fördergases und/oder der Oberflächenfeuchte des Schüttguts, wobei bevorzugt am Ende der Förderleitung gemessen wird. Im Falle der Feuchtemessung des Fördergases kann auch eine Messung in der Reinluftleitung mit Vorteil durchgeführt werden. Alternativ kann die relative Feuchte des Abluftstroms nach Abscheidung des Schüttguts am Zielort als Meßgröße dienen.

Die relative Feuchte am Ende der Förderleitung kann selbstverständlich auf rechnerischem Wege durch Bilanzierung der Massenströme von Fördergas, Wassergehalt im Fördergas, Schüttgut und zugefügter Flüssigkeit unter Berücksichtigung von Druck und Temperatur bestimmt werden, wobei die Menge der zugefügten Flüssigkeit in Abhängigkeit vom Massenstrom des Schüttguts und/oder des Fördergases verändert wird.

Um die patentgemäße Wirkung über einen möglichst großen Teil des Förderweges zu erhalten, erfolgt die Zugabe der Flüssigkeit bevorzugt im Bereich des Aufgabeortes.

Nach einer weiteren Ausführung der Erfindung erfolgt die Zugabe an Flüssigkeit stromauf des Aufgabeortes in das Fördergas. Dieses Vorgehen ist bei der Förderung poröser Schüttgüter zu bevorzugen, bei denen eine direkte Benetzung mit Flüssigkeit zu einer unzulässig hohen Wasseraufnahme führen würde.

Eine direkte Benetzung des Schüttguts, beispielsweise unterhalb der produktaufgebenden Zellenradschleuse bietet jedoch in den meisten Fällen den Vorteil einer einfachen apparativen Umsetzung und einer guten Verteilung des Flüssigkeitsstroms.

Grundsätzlich ist es auch möglich, die Flüssigkeit nach dem Zusammenführen des Schüttguts und des Fördergases dem Förderstrom zuzusetzen, gegebenenfalls an mehreren zueinander in Strömungsrichtung beabstandeten Stellen der Förderleitung. Es versteht sich, daß die Zugabe der Flüssigkeit auch in Form von Dampf oder eines Nebels erfolgen kann.

Als Flüssigkeit ist insbesondere entmineralisiertes oder destilliertes Wasser geeignet, das preiswert zu beschaffen ist, rückstandslos verdampft und darüber hinaus auf übliche Rohrwerkstoffe nicht korrosiv wirkt.

Die relative Feuchte des Fördergases am Ende der Förderleitung beträgt beispielsweise 50% bis 90%, bevorzugt 60% bis 80%. Bei Einstellung dieser Werte ist gewährleistet, daß über einen ausreichend langen Teil der Förderleitung freies, flüssiges Wasser vorliegt, das jedoch am Ende der Förderleitung sicher verdampft ist.

Eine zur Durchführung des erfindungsgemäßen Verfahrens geeignete Vorrichtung umfaßt einen Aufgabeort mit einer Einrichtung zur Schüttguteinspeisung, einen Zielort, eine Aufgabe- und Zielort verbindende Förderleitung sowie eine Befeuchtungseinrichtung, wobei in der Förderanlage eine Einrichtung zur Messung der Feuchte des Fördergases und/oder der Schüttgutfeuchte vorgesehen ist. Die Einrichtung kann im Bereich des Zielorts, insbesondere am Ende der Förderleitung oder bei Messung der Gasfeuchte auch in der Reinluftleitung angeordnet werden.

Bevorzugt ist der Einrichtung zur Feuchtemessung ein die Menge der hinzugefügten Flüssigkeit in Abhängigkeit von der gemessenen Feuchte verändernder Regler zugeordnet.

### Figuren

Das Verfahren wird nachfolgend anhand der Figuren ausführlich erläutert.

Es zeigen:

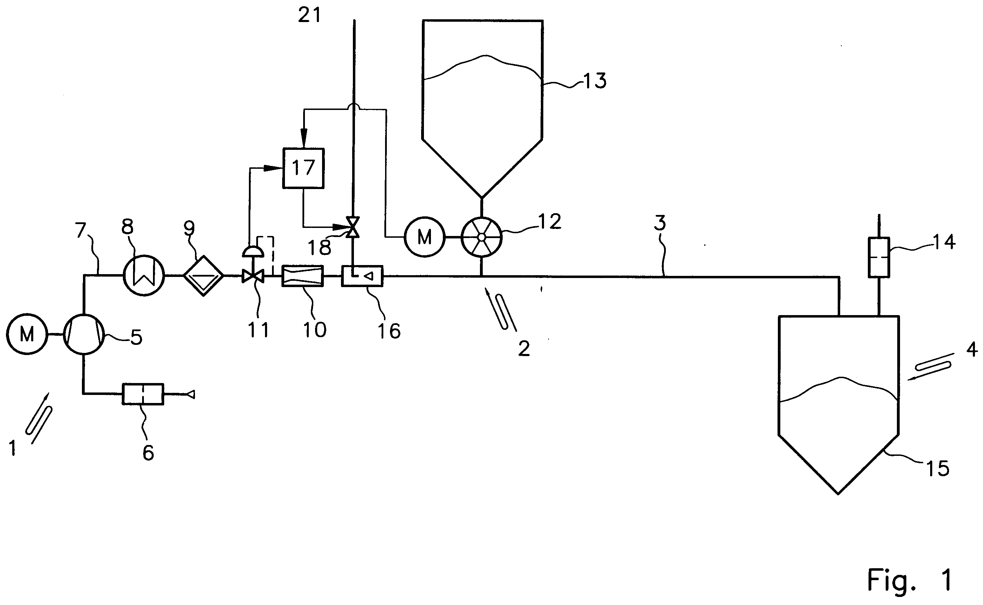

- Fig. 1: eine Anlage zur Durchführung des Verfahrens nach Anspruch 1
- Fig. 2: eine vergrößerte Darstellung der Befeuchtungseinrichtung für das Fördergas nach Figur 1
- Fig. 3: eine Anlage zur Durchführung des Verfahrens nach Anspruch 2
- Fig. 4: eine vergrößerte Darstellung der Befeuchtungseinrichtung für das Schüttgut nach Figur 3
- Fig. 5: eine alternative Ausführung einer Befeuchtungseinrichtung für das Schüttgut

Die beispielhaft dargestellte Anlage zur pneumatischen Langsamförderung von Kunststoffgranulaten umfaßt eine Vorrichtung 1 zur Bereitstellung des Fördergases, einen Aufgabeort 2, eine Förderleitung 3 und einen Zielort 4. Die Vorrichtung 1 zur Bereitstellung des Fördergases besteht aus einem Verdichter 5, der über einen Filter 6 Luft aus der Umgebung ansaugt, verdichtet und in die Reinluftleitung 7 einspeist, wo die Luft mittels eines Wärmetauschers 8 gekühlt wird. Ein Wasserabscheider 9 senkt die Feuchte des Fördergases nachfolgend bis zur Sättigungsgrenze ab. Der in die Förderleitung 3 eintretende Volumenstrom an Fördergas wird über eine Lavaldüse 10 mit vorgeschaltetem Druckregler 11 festgelegt.

Eine Zellenradschleuse 12 speist am Aufgabeort 2 kontinuierlich Schüttgut aus einem Vorratsbehälter 13 in die Förderleitung 3 ein, das anschließend mit Hilfe des sich über den Förderweg entspannenden Fördergases zum Zielort 4, nämlich dem über einen Filter 14 mit der Umgebung in Verbindung stehenden Empfangsbehälter 15 befördert wird.

Beträgt der absolute Druck des vom Verdichter 5 bereitgestellten Fördergases beispielsweise 4,3 bar bei einer Temperatur von 27°C, enthält das Reingas stromab des Wasserabscheiders 9 bei einer relativen Luftfeuchte von 100% etwa 5,2 g Wasser auf 1 kg Luft. Während des Fördervorgangs entspannt sich das Fördergas bei abnehmender relativer Luftfeuchte auf den Umgebungsdruck von 1 bar. Am Ende der Förderleitung 3, also im Bereich des Zielorts 4 beträgt die relative Luftfeuchte ohne zusätzliche Zugabe an Wasser nur noch 23% und liegt damit erheblich unter der Sättigungsgrenze.

Zwischen dem Wasserabscheider 9 und dem Aufgabeort 2 ist eine Befeuchtungseinrichtung 16 angeordnet, über die eine einstellbare Menge an Wasser in die Reinluftleitung 7 eingedüst wird. Eine Steuerung 17 verändert die Stellung des Zulaufventils 18 und damit die Menge des eingedüsten Wassers in Abhängigkeit von der Stellung des Druckreglers 11 und der Drehzahl der Zellenradschleuse 12 in der Weise, daß sich in der Förderleitung beim Eintritt in den Empfangsbehälter 15 ein Feuchtegehalt unterhalb der Sättigungsgrenze, beispielsweise eine relative Luftfeuchte von 60% einstellt. Die Steuerung muß selbstverständlich vorab für alle gewünschten Betriebspunkte kalibriert werden.

Die Sättigungsgrenze am Zielort liegt im Ausführungsbeispiel bei etwa 23 g Wasser auf 1 kg Luft. Unter Einhaltung der relativen Luftfeuchte am Ende der Förderleitung von 60% reduziert sich der zulässige Wassergehalt auf 13,6 g pro kg Luft, so daß von der Befeuchtungseinrichtung stromauf des Aufgabeorts 2 noch 8,4 g Wasser auf je kg Luft zuzugeben sind, die anfangs in flüssiger Form vorliegen und im Laufe der Förderung sukzessive als Wasserdampf vom Fördergas aufgenommen werden.

Über einen großen Teil der Förderleitungslänge hinweg ist der Förderstrom jedoch übersättigt, so daß das auskondensierende Wasser die erwünschte Wirkung entfalten kann. Darüber hinaus tritt bei einigen Schüttgütern mit zunehmender Feuchte auch eine Verringerung des Förderdruckverlustes ein, so daß die Anlage mit einem geringeren Förderdruck betrieben werden kann, ohne zu verstopfen.

Der im Ausführungsbeispiel berechnete Wassergehalt in der Reinluft von 5,2 g pro kg Luft ist vergleichsweise hoch angesetzt. Falls das Fördergas einem Druckluftnetz entnommen wird, ist die in ihr enthaltene Wassermenge zur Vermeidung von Korrosionsschäden in den Druckluftleitungen erheblich geringer, so daß über die Befeuchtungseinrichtung 16 eine wesentlich größere Wassermenge zugeführt werden muß.

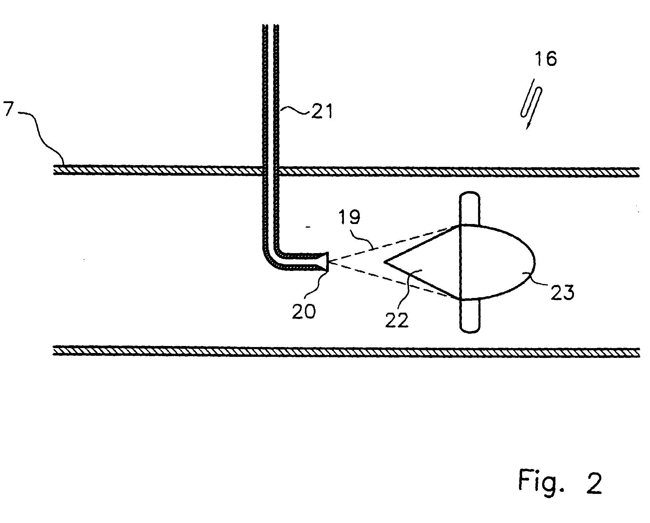

Die in Figur 2 abgebildete Befeuchungseinrichtung 16 besteht aus einer einen Sprühkegel 19 erzeugenden Düse 20, die über ein Zuführrohr 21 mittig in der Reinluftleitung gehalten wird. Sie ist auf die Spitze eines koaxial zur Düse angeordneten, beheizbaren Kegels 22 gerichtet, und zwar in einer solchen Weise, daß der größte Umfang des Sprühkegels 19 etwa dem größten Umfang des beheizbaren Kegels 22 entspricht. Auf die Stirnfläche des beheizbaren Kegels 22 kann ein Leitkörper 23 aufgesetzt werden, der den Druckverlust im Bereich der Befeuchtungseinrichtung 16 verringert.

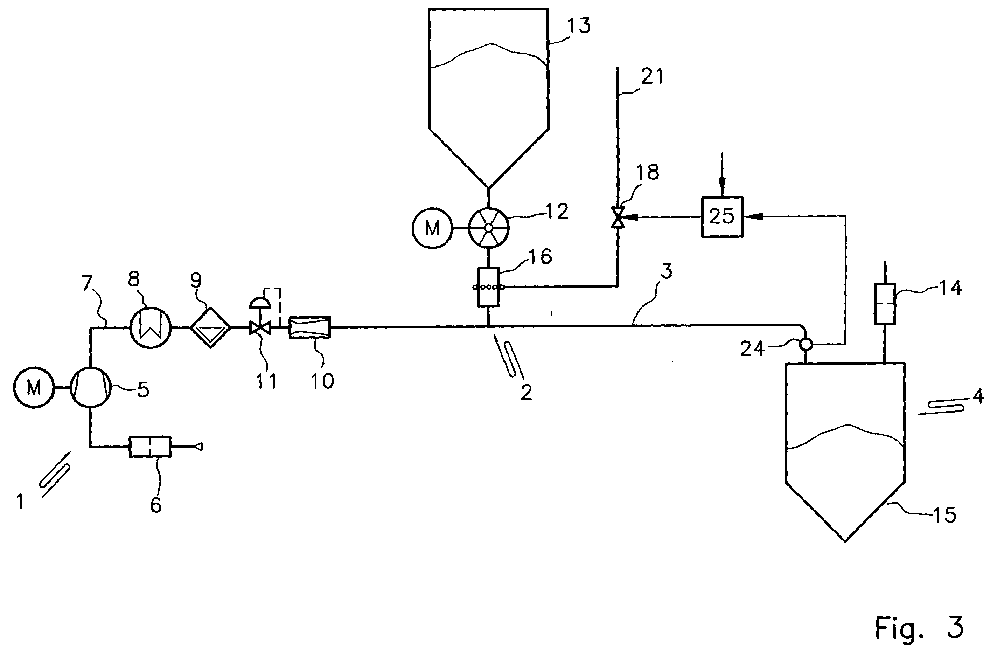

Im Ausführungsbeispiel nach Figur 3 ist am Ende der Förderleitung ein Sensor 24 angeordnet, über den im wesentlichen kontinuierlich die relative Feuchte des Fördergasstroms gemessen wird. Der Meßwert wird in einem Regler 25 mit einem Sollwert verglichen, der in Abhängigkeit von der Abweichung das Zulaufventil 18 verstellt.

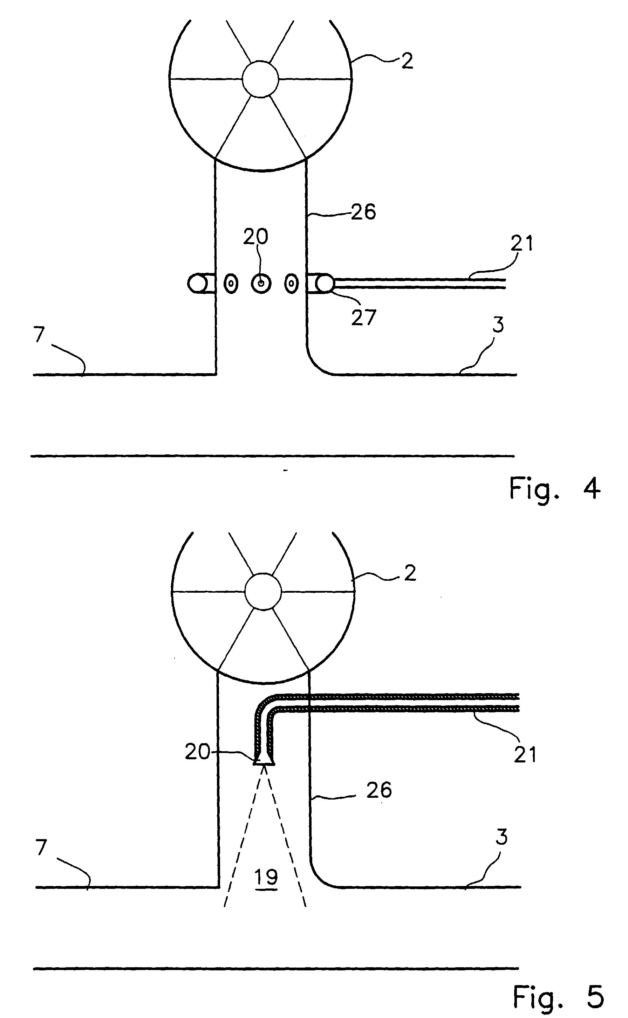

Die Befeuchtungseinrichtung 16 ist nicht in der Reinluftleitung 7, sondern, wie aus Figur 4 im Detail ersichtlich, unmittelbar unterhalb der Zellenradschleuse 12 in einem Übergangsstück 26 angeordnet und hat daher keinen zusätzlichen Förderdruckverlust zur Folge.

Die über das Zulaufventil 18 einstellbare Wassermenge wird in einem Ringkanal 27 um das Übergangsstück 26 herum verteilt und einer Vielzahl auf dem Umfang desselben angeordneten Düsen 20 zugeführt. Die Düsen sprühen die zuzugebende Wassermenge in Form eines feinverteilten Flüssigkeitsnebels auf das von der Zellenradschleuse 12 zugeführte Schüttgut auf.

Eine alternative Ausführungsform der Befeuchtungseinrichtung 16 zeigt Fig. 5. Das aus der Zellenradschleuse 2 zur Förderleitung 3 fallende Schüttgut wird im Übergangsstück 26 mit einem nach unten gerichteten, aus einer Düse 20 in Form eines Sprühkegels 19 austretenden Flüssigkeitsnebel beaufschlagt.

### Bezugszeichenliste

- 1: Vorrichtung zur Bereitstellung des Fördergases
- 2: Aufgabeort
- 3: Förderleitung
- 4: Zielort
- 5: Verdichter
- 6: Filter
- 7: Reinluftleitung
- 8: Wärmetauscher
- 9: Wasserabscheider
- 10: Lavaldüse
- 11: Druckregler
- 12: Zellenradschleuse
- 13: Vorratsbehälter
- 14: Filter
- 15: Empfangsbehälter
- 16: Befeuchtungseinrichtung
- 17: Steuerung
- 18: Zulaufventil
- 19: Sprühkegel
- 20: Düse
- 21: Zuführrohr
- 22: beheizbarer Kegel
- 23: Leitkörper
- 24: Sensor
- 25: Regler
- 26: Übergangsstück
- 27: Ringkanal

## Patentansprüche

1. Verfahren zur pneumatischen Förderung von Schüttgütern, insbesondere von Kunststoffgranulaten, bei der das Schüttgut mittels eines Fördergases unter Hinzufügung einer Flüssigkeit durch eine Förderleitung (3) von einem Aufgabeort (2) zu einem Zielort (4) bewegt wird, dadurch gekennzeichnet, daß dem Schüttgut und/oder dem Fördergas eine solche Menge an Flüssigkeit zugegeben wird, daß das Fördergas während des Fördervorgangs zumindest bereichsweise in der Förderleitung (3) mit Flüssigkeit übersättigt ist, seine relative Feuchte am Ende der Förderleitung (3) jedoch unterhalb der Sättigungsgrenze liegt.

2. Verfahren zur pneumatischen Förderung von Schüttgütern, bei der das Schüttgut mittels eines Fördergases unter Hinzufügung einer Flüssigkeit durch eine Förderleitung (3) von einem Aufgabeort (2) zu einem Zielort (4) bewegt wird, insbesondere nach Anspruch 1, dadurch gekennzeichnet, daß die Menge der zugefügten Flüssigkeit in Abhängigkeit von der relativen Feuchte des Fördergases und/oder der Oberflächenfeuchte des Schüttguts geregelt wird.

3. Verfahren nach Anspruch 2, dadurch gekennzeichnet, daß die Menge der zugefügten Flüssigkeit in Abhängigkeit von der relativen Feuchte des Fördergases und/oder der Oberflächenfeuchte am Ende der Förderleitung (3) geregelt wird.

4. Verfahren nach Anspruch 2, dadurch gekennzeichnet, daß die Menge der zugefügten Flüssigkeit in Abhängigkeit von der relativen Feuchte des Fördergases in der Reinluftleitung geregelt wird.

5. Verfahren zur pneumatischen Förderung von Schüttgütern, bei der das Schüttgut mittels eines Fördergases unter Hinzufügung einer Flüssigkeit durch eine Förderleitung (3) von einem Aufgabeort (2) zu einem Zielort (4) bewegt wird, insbesondere nach Anspruch 1, dadurch gekennzeichnet, daß die Menge der zugefügten Flüssigkeit in Abhängigkeit vom Massenstrom des Schüttguts und/oder des Fördergases verändert wird.

6. Verfahren nach einem der Ansprüche 1 bis 5, dadurch gekennzeichnet, daß die Zugabe der Flüssigkeit im Bereich des Aufgabeortes (2) erfolgt.

7. Verfahren nach einem der vorhergehenden Ansprüche, dadurch gekennzeichnet, daß die Flüssigkeit dem Fördergas stromauf des Aufgabeortes (2) zugegeben wird.

8. Verfahren nach einem der vorhergehenden Ansprüche, dadurch gekennzeichnet, daß die Zugabe an Flüssigkeit stromauf des Aufgabeortes (2) in das Schüttgut erfolgt.

9. Verfahren nach einem der vorhergehenden Ansprüche, dadurch gekennzeichnet, daß die Flüssigkeit dem Förderstrom aus Schüttgut und Fördergas stromab des Aufgabeortes (2) zugegeben wird.

10. Verfahren nach Anspruch 9, dadurch gekennzeichnet, daß die Flüssigkeit dem Förderstrom an mehreren zueinander in Strömungsrichtung beabstandeten Stellen der Förderleitungen zugegeben wird.

11. Verfahren nach einem der vorhergehenden Ansprüche, dadurch gekennzeichnet, daß die Flüssigkeit Wasser, insbesondere entmineralisiertes oder destilliertes Wasser ist.

12. Verfahren nach einem der vorhergehenden Ansprüche, dadurch gekennzeichnet, daß die relative Feuchte des Fördergases am Ende der Förderleitung 50% bis 90%, bevorzugt 60% bis 80% beträgt.

13. Vorrichtung zur Durchführung des Verfahrens nach Anspruch 1 oder 2, umfassend einen Aufgabeort (2) mit einer Einrichtung (12) zur Schüttguteinspeisung, einen Zielort (4), eine Aufgabe- und Zielort verbindende Förderleitung (3) sowie eine Befeuchtungseinrichtung (16), gekennzeichnet durch eine Einrichtung zur Messung der Feuchte des Fördergases und/oder der Schüttgutfeuchte.

14. Vorrichtung nach Anspruch 13, dadurch gekennzeichnet, daß die Einrichtung zur Messung der Feuchte im Bereich des Zielorts, insbesondere am Ende der Förderleitung angeordnet ist.

15. Vorrichtung nach Anspruch 13, dadurch gekennzeichnet, daß die Einrichtung zur Messung der Feuchte in der Reinluftleitung angeordnet ist.

16. Vorrichtung nach Anspruch 13 bis 15, gekennzeichnet durch einen die Menge der hinzugefügten Flüssigkeit in Abhängigkeit vom Meßwert der Einrichtung zur Feuchtemessung verändernden Regler.
